# EUROPEAN PATENT APPLICATION

(11) **EP 4 780 038 A1**
(43) Date of publication of application: **22.07.2026**
(21) Application number: 24864508.7
(22) Date of filing: 04.09.2024
(51) Int. Cl.: H04W 12/06, H04W 12/069

(54) **AUTHENTICATION PROCESSING METHOD AND APPARATUS, TERMINAL AND NETWORK SIDE DEVICE**

(30) Priority: 11.09.2023 CN 202311166531
(71) Applicant: Vivo Mobile Communication Co., Ltd., Dongguan, Guangdong 523863 (CN)
(72) Inventor: XIE, Zhenhua, Dongguan, Guangdong 523863 (CN)
(74) Representative: Lavoix
(86) International application number: PCT/CN2024/116695
(87) International publication number: WO 2025/055786

(57) **Abstract**

This application discloses an authentication processing method and apparatus, a terminal, and a network side device, and pertains to the field of communication technologies. The authentication processing method in embodiments of this application includes: a first network function receives first information from a second network function or a third network function; the first network function sends second information to the third network function based on the first information, where the second information includes authentication information; the third network function sends third information to an access network device; the access network device broadcasts fourth information; a user terminal receives the fourth information and sends fifth information based on the fourth information; and the first network function or the third network function receives the fifth information or a first response parameter, and authenticates the user terminal based on the fifth information or the first response parameter.

## Description

### CROSS-REFERENCE TO RELATED APPLICATIONS

This application claims priority to Chinese Patent Application No. 202311166531.3, filed in China on September 11, 2023, which is incorporated herein by reference in its entirety.

### TECHNICAL FIELD

This application pertains to the field of communication technologies, and specifically, relates to an authentication processing method and apparatus, a terminal, and a network side device.

### BACKGROUND

With development of communication technologies, an ambient internet of things (Ambient IoT, AIoT) technology is introduced into a communication system. A user terminal or a device in AIoT may be a tag-like device, which is activated by using an excitation signal and is an electronic device with limited capabilities. Authentication on a user terminal in the AIoT cannot be implemented based on a conventional authentication procedure. Therefore, how to implement authentication on a user terminal in the AIoT becomes a problem to be urgently resolved.

### SUMMARY

Embodiments of this application provide an authentication processing method and apparatus, a terminal, and a network side device, which can resolve a problem of authenticating a user terminal in AloT.

According to a first aspect, an authentication processing method is provided, including:
receiving, by a first network function, first information from a second network function or a third network function;
sending, by the first network function, second information to the third network function based on the first information, where the second information includes authentication information, and the authentication information includes a challenge parameter or a random character string;
sending, by the third network function, third information to an access network device, where the third information includes any one of the authentication information, the challenge parameter, and the random character string;
broadcasting, by the access network device, fourth information, where the fourth information includes any one of the authentication information, the challenge parameter, and the random character string;
receiving, by a user terminal, the fourth information, and sending fifth information based on the fourth information, where the fifth information includes a first response parameter, and the first response parameter is generated based on the challenge parameter or the random character string; and
receiving, by the first network function or the third network function, the fifth information or the first response parameter, and authenticating the user terminal based on the fifth information or the first response parameter.

According to a second aspect, an authentication processing method is provided, including:
sending, by a user terminal, fifth information based on fourth information in a case of receiving the fourth information broadcast by an access network device; where
the fourth information includes any one of authentication information, a challenge parameter, and a random character string;
the fifth information includes a first response parameter, and the first response parameter is generated based on the challenge parameter or the random character string; and
the authentication information includes the challenge parameter or the random character string.

According to a third aspect, an authentication processing method is provided, including:
receiving, by a first network function, first information from a second network function or a third network function; and
sending, by the first network function, second information to the third network function based on the first information, where the second information includes authentication information, and the authentication information includes a challenge parameter or a random character string, where
the authentication information is generated based on information not related to a user terminal, or the authentication information does not include a second response parameter.

According to a fourth aspect, an authentication processing method is provided, including:
sending, by a second network function, first information to a first network function, where the first information is used to trigger the first network function to send second information to a third network function, the second information includes authentication information, and the authentication information includes a challenge parameter or a random character string.

According to a fifth aspect, an authentication processing method is provided, including:
receiving, by a third network function, second information, where the second information includes authentication information, and the authentication information includes a challenge parameter or a random character string; and
sending, by the third network function, third information to an access network device, where the third information includes any one of the authentication information, the challenge parameter, and the random character string, where
the second information is sent by a first network function or a fourth network function.

According to a sixth aspect, an authentication processing method is provided, including:
receiving, by a fourth network function, sixth information from a first network function, where the sixth information includes a challenge parameter or a random character string, and a target identifier associated with a user terminal; and
performing, by the fourth network function based on the sixth information, at least one of the following:
   sending a second response parameter to the first network function; and
   authenticating the user terminal.

According to a seventh aspect, an authentication processing method is provided, including:
receiving, by an access network device, third information from a third network function, where the third information includes any one of authentication information, a challenge parameter, and a random character string; and
broadcasting, by the access network device, fourth information, where the fourth information includes any one of the authentication information, the challenge parameter, and the random character string, where
the authentication information includes the challenge parameter or the random character string.

According to an eighth aspect, an authentication processing system is provided, including a first network function, a second network function, a third network function, an access network device, and a user terminal, where
the first network function is configured to receive first information from the second network function or the third network function, and send second information to the third network function based on the first information, where the second information includes authentication information, and the authentication information includes a challenge parameter or a random character string;
the third network function is configured to send third information to the access network device, where the third information includes any one of the authentication information, the challenge parameter, and the random character string;
the access network device is configured to broadcast fourth information, where the fourth information includes any one of the authentication information, the challenge parameter, and the random character string;
the user terminal is configured to receive the fourth information, and send fifth information based on the fourth information, where the fifth information includes a first response parameter, and the first response parameter is generated based on the challenge parameter or the random character string; and
the first network function or the third network function is configured to receive the fifth information or the first response parameter, and authenticate the user terminal based on the fifth information or the first response parameter.

According to a ninth aspect, an authentication processing apparatus is provided, including:
a first sending module, configured to send fifth information based on fourth information in a case that the fourth information broadcast by an access network device is received.

The fourth information includes any one of authentication information, a challenge parameter, and a random character string.

The fifth information includes a first response parameter, and the first response parameter is generated based on the challenge parameter or the random character string.

The authentication information includes the challenge parameter or the random character string.

According to a tenth aspect, an authentication processing apparatus is provided, including:
a first receiving module, configured to receive first information from a second network function or a third network function; and
a second sending module, configured to send second information to the third network function based on the first information, where the second information includes authentication information, and the authentication information includes a challenge parameter or a random character string.

The authentication information is generated based on information not related to a user terminal, or the authentication information does not include a second response parameter.

According to an eleventh aspect, an authentication processing apparatus is provided, including:
a third sending module, configured to send first information to a first network function. The first information is used to trigger the first network function to send second information to a third network function, the second information includes authentication information, and the authentication information includes a challenge parameter or a random character string.

According to a twelfth aspect, an authentication processing apparatus is provided, including:
a second receiving module, configured to receive second information, where the second information includes authentication information, and the authentication information includes a challenge parameter or a random character string; and
a fourth sending module, configured to send third information to an access network device, where the third information includes any one of the authentication information, the challenge parameter, and the random character string.

The second information is sent by a first network function or a fourth network function.

According to a thirteenth aspect, an authentication processing apparatus is provided, including:
a third receiving module, configured to receive sixth information from a first network function, where the sixth information includes a challenge parameter or a random character string, and a target identifier associated with a user terminal; and
a first execution module, configured to perform, based on the sixth information, at least one of the following:
   sending a second response parameter to the first network function; and
   authenticating the user terminal.

According to a fourteenth aspect, an authentication processing apparatus is provided, including:
a fourth receiving module, configured to receive third information from a third network function, where the third information includes any one of authentication information, a challenge parameter, and a random character string; and
a fifth sending module, configured to broadcast fourth information, where the fourth information includes any one of the authentication information, the challenge parameter, and the random character string.

The authentication information includes the challenge parameter or the random character string.

According to a fifteenth aspect, a terminal is provided. The terminal includes a processor and a memory. The memory stores a program or instructions capable of running on the processor, and the program or instructions are executed by the processor to implement the steps of the method according to the second aspect.

According to a sixteenth aspect, a terminal is provided, including a processor and a communication interface. The communication interface is configured to send fifth information based on fourth information in a case that the fourth information broadcast by an access network device is received.

The fourth information includes any one of authentication information, a challenge parameter, and a random character string.

The fifth information includes a first response parameter, and the first response parameter is generated based on the challenge parameter or the random character string.

The authentication information includes the challenge parameter or the random character string.

According to a seventeenth aspect, a network side device is provided. The network side device includes a processor and a memory, and the memory stores a program or instructions capable of running on the processor. The program or the instructions are executed by the processor to implement the steps of the method according to the third aspect, or implement the steps of the method according to the fourth aspect, or implement the steps of the method according to the fifth aspect, or implement the steps of the method according to the sixth aspect, or implement the steps of the method according to the seventh aspect.

According to an eighteenth aspect, a network side device is provided, including a processor and a communication interface.

When the network side device is a first network function, the communication interface is configured to receive first information from a second network function or a third network function, and send second information to the third network function based on the first information. The second information includes authentication information, and the authentication information includes a challenge parameter or a random character string.

The authentication information is generated based on information not related to a user terminal, or the authentication information does not include a second response parameter.

When the network side device is the second network function, the communication interface is configured to send the first information to the first network function. The first information is used to trigger the first network function to send the second information to the third network function. The second information includes the authentication information, and the authentication information includes the challenge parameter or the random character string.

When the network side device is the third network function, the communication interface is configured to receive the second information, where the second information includes the authentication information, and the authentication information includes the challenge parameter or the random character string; and send third information to an access network device, where the third information includes any one of the authentication information, the challenge parameter, and the random character string.

The second information is sent by the first network function or a fourth network function.

When the network side device is the fourth network function, the communication interface is configured to receive sixth information from the first network function, where the sixth information includes the challenge parameter or the random character string, and a target identifier associated with a user terminal; and perform, based on the sixth information, at least one of the following:
sending a second response parameter to the first network function; and
authenticating the user terminal.

When the network side device is the access network device, the communication interface is configured to receive the third information from the third network function, where the third information includes any one of the authentication information, the challenge parameter, and the random character string; and broadcast fourth information, where the fourth information includes any one of the authentication information, the challenge parameter, and the random character string.

The authentication information includes the challenge parameter or the random character string.

According to a nineteenth aspect, a readable storage medium is provided. The readable storage medium stores a program or instructions. The program or the instructions are executed by a processor to implement the steps of the method according to the second aspect, or implement the steps of the method according to the third aspect, or implement the steps of the method according to the fourth aspect, or implement the steps of the method according to the fifth aspect, or implement the steps of the method according to the sixth aspect, or implement the steps of the method according to the seventh aspect.

According to a twentieth aspect, a wireless communication system is provided, including a terminal and a network side device. The terminal may be configured to perform the steps of the method according to the second aspect. The network side device may be configured to perform the steps of the method according to the third aspect, or implement the steps of the method according to the fourth aspect, or implement the steps of the method according to the fifth aspect, or implement the steps of the method according to the sixth aspect, or implement the steps of the method according to the seventh aspect.

According to a twenty-one aspect, a chip is provided, where the chip includes a processor and a communication interface. The communication interface is coupled to the processor, and the processor is configured to run a program or instructions to implement the method according to the second aspect, or implement the method according to the third aspect, or implement the steps of the method according to the fourth aspect, or implement the steps of the method according to the fifth aspect, or implement the steps of the method according to the sixth aspect, or implement the steps of the method according to the seventh aspect.

According to a twenty-two aspect, a computer program/program product is provided. The computer program/program product is stored in a storage medium, and the program/program product is executed by at least one processor to implement the method according to the second aspect, or implement the method according to the third aspect, or implement the steps of the method according to the fourth aspect, or implement the steps of the method according to the fifth aspect, or implement the steps of the method according to the sixth aspect, or implement the steps of the method according to the seventh aspect.

In the embodiments of this application, the first information from the second network function or the third network function is received by the first network function. The first network function sends the second information to the third network function based on the first information, where the second information includes the authentication information, and the authentication information includes the challenge parameter or the random character string. The third network function sends the third information to the access network device, where the third information includes any one of the authentication information, the challenge parameter, and the random character string. The access network device broadcasts the fourth information, where the fourth information includes any one of the authentication information, the challenge parameter, and the random character string. The user terminal receives the fourth information and sends the fifth information based on the fourth information, where the fifth information includes the first response parameter, and the first response parameter is generated based on the challenge parameter or the random character string. The first network function or the third network function receives the fifth information or the first response parameter and authenticates the user terminal based on the fifth information or the first response parameter. In this way, because the user terminal is authenticated based on the fourth information broadcast by the access network device, there is no need for a user terminal to access the network before authentication, so as to simplify a procedure of authenticating a user terminal and meet a capability requirement of authenticating a user terminal in the AIoT. Therefore, in the embodiments of this application, authentication on a user terminal in the AIoT can be effectively implemented.

### BRIEF DESCRIPTION OF DRAWINGS

FIG. 1 is a block diagram of a wireless communication system to which an embodiment of this application is applicable;
FIG. 2 is a schematic flowchart 1 of an authentication processing method according to an embodiment of this application;
FIG. 3 is a schematic flowchart 2 of an authentication processing method according to an embodiment of this application;
FIG. 4 is a schematic flowchart 3 of an authentication processing method according to an embodiment of this application;
FIG. 5 is a schematic flowchart 4 of an authentication processing method according to an embodiment of this application;
FIG. 6 is a schematic flowchart 5 of an authentication processing method according to an embodiment of this application;
FIG. 7 is a schematic flowchart 6 of an authentication processing method according to an embodiment of this application;
FIG. 8 is a schematic flowchart 7 of an authentication processing method according to an embodiment of this application;
FIG. 9 is a schematic diagram 1 of a structure of an authentication processing apparatus according to an embodiment of this application;
FIG. 10 is a schematic diagram 2 of a structure of an authentication processing apparatus according to an embodiment of this application;
FIG. 11 is a schematic diagram 3 of a structure of an authentication processing apparatus according to an embodiment of this application;
FIG. 12 is a schematic diagram 4 of a structure of an authentication processing apparatus according to an embodiment of this application;
FIG. 13 is a schematic diagram 5 of a structure of an authentication processing apparatus according to an embodiment of this application;
FIG. 14 is a schematic diagram 6 of a structure of an authentication processing apparatus according to an embodiment of this application;
FIG. 15 is a schematic diagram of a structure of a communication device according to an embodiment of this application;
FIG. 16 is a schematic diagram of a structure of a terminal according to an embodiment of this application;
FIG. 17 is a schematic diagram of a structure of a network side device according to an embodiment of this application; and
FIG. 18 is a schematic diagram of a structure of another network side device according to an embodiment of this application.

### DESCRIPTION OF EMBODIMENTS

The terms "first", "second", and the like in this application are used to distinguish between similar objects instead of describing a specified order or sequence. It should be understood that terms used in this way are interchangeable under appropriate circumstances, so that embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

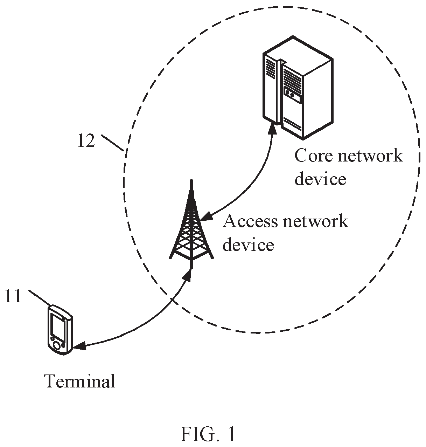

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another proper term in the art. The base station is not limited to a specific technical term, provided that the same technical effect is achieved. It should be noted that in this embodiment of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of this application, only a core network device in the NR system is used as an example for description, and a specific type of the core network device is not limited.

For ease of understanding, the following describes some content related to this embodiment of this application.

A conventional authentication procedure for a user terminal is as follows: The user terminal first accesses a network side device, initiates establishment of a radio resource control (Radio Resource Control, RRC) connection, and then sends a non-access stratum (Non-Access Stratum, NAS) message that carries a terminal identifier. Then, the network side device searches for context or subscription information of the terminal, obtains an authentication vector, and authenticates the terminal based on the authentication vector. After authentication succeeds, the terminal is allowed to establish a connection and a network service is provided. An authentication process includes bidirectional authentication (where the terminal authenticates the network while the network side device authenticates the terminal) or unidirectional authentication (where the network side device authenticates the terminal).

In a conventional authentication process for a user terminal, the terminal needs to perform a plurality of RRC interactions and NAS interactions to complete authentication, which cannot be implemented for low-power user equipment with limited capabilities. Therefore, an authentication processing method in this application is provided.

The following describes in detail an authentication processing method provided in embodiments of this application with reference to accompanying drawings by using some embodiments and application scenarios thereof.

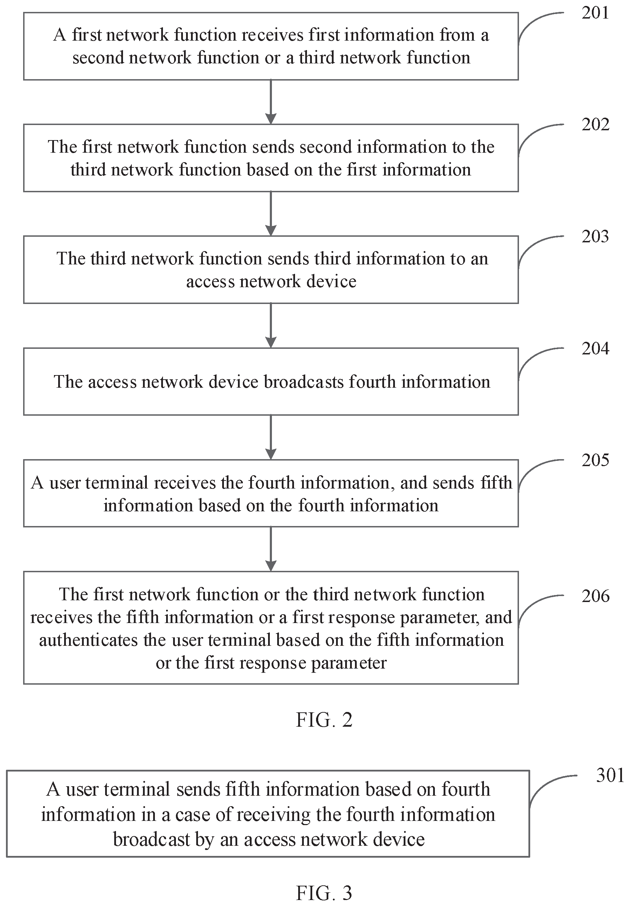

Referring to FIG. 2, an embodiment of this application provides an authentication processing method. As shown in FIG. 2, the authentication processing method includes the following steps.

Step 201: A first network function receives first information from a second network function or a third network function.

Step 202: The first network function sends second information to the third network function based on the first information, where the second information includes authentication information, and the authentication information includes a challenge parameter or a random character string.

Step 203: The third network function sends third information to an access network device, where the third information includes any one of the authentication information, the challenge parameter, and the random character string.

Step 204: The access network device broadcasts fourth information, where the fourth information includes any one of the authentication information, the challenge parameter, and the random character string.

Step 205: A user terminal receives the fourth information, and sends fifth information based on the fourth information, where the fifth information includes a first response parameter, and the first response parameter is generated based on the challenge parameter or the random character string.

Step 206: The first network function or the third network function receives the fifth information or the first response parameter, and authenticates the user terminal based on the fifth information or the first response parameter.

In this embodiment of this application, the first network function may be understood as a tag information storage function, a UDM, a UDR, or an authentication server function (Authentication Server Function, AUSF). The second network function may be understood as an NEF or an AF. The third network function may be understood as an AMF. In a case that the first network function is the AUSF, the fourth network function may be understood as a tag information storage function, a UDM, or a UDR. The user terminal may also be referred to as a terminal.

Optionally, a transmission behavior between different network functions may be understood as direct or indirect transmission. For example, that the first network function sends the second information to the third network function based on the first information may be understood as that the first network function sends the second information directly or indirectly to the third network function based on the first information.

Optionally, after receiving the second information, the third network function may send all content of the second information to the access network device, or may send some content of the second information to the access network device, or may send content generated or derived from the second information to the access network device, or may determine, based on content of the second information, a specific access network device to which the content of the second information is to be sent. In other words, the third information may include some or all content of the second information. For example, the authentication information is sent, or the challenge parameter (Challenge) or the random character string (RAND) in the authentication information is sent.

Optionally, in some embodiments, the first information may be used to determine a to-be-authenticated terminal. In some embodiments, the first information may be information or content that is not associated with the user terminal.

Optionally, the access network device may use an excitation signal to carry the fourth information. Alternatively, the fourth information may be carried by using a system information (System Information, SI) message. In this case, the access network device may send the excitation signal, and broadcast the fourth information by using the SI message.

Optionally, user equipment detects the fourth information from the excitation signal after receiving the excitation signal, or monitors a broadcast message and detects the fourth information from the broadcast message (for example, the SI message). The fifth information may be sent based on the fourth information, so that the first network function or the third network function can authenticate the user terminal.

It should be noted that, in this embodiment of this application, for different network functions, a specific transmission behavior may include the following cases:

Case 1: The NEF sends the first information to the UDM/UDR, the UDM/UDR sends the second information to the AMF by using the AUSF, the AMF sends the third information to the access network device, and the access network device broadcasts the fourth information. The user terminal sends the fifth information or the first response parameter to the AMF, the AMF sends (or uses the AUSF to send) the fifth information or the first response parameter to the UDM/UDR, and then the UDM/UDR performs authentication.

Case 2: The NEF/AF sends (or uses the UDM/UDR to send) the first information to the AUSF, the AUSF sends the second information to the AMF, the AMF sends the third information to the access network device, and the access network device broadcasts the fourth information. The user terminal sends the fifth information or the first response parameter to the AMF, the AMF sends the fourth information or the first response parameter to the AUSF, and then the AUSF performs authentication. Alternatively, the AUSF sends sixth information to the UDM/UDR, and the UDM/UDR performs authentication and sends an authentication result to the AUSF. Alternatively, the UDM/UDR sends a second response parameter to the AUSF, and then the AUSF performs authentication.

Case 3: For the foregoing cases 1 and 2, the NEF may be replaced with the AMF.

Case 4: For the foregoing cases 1 and 2, after the AMF receives the fifth information, the AMF also performs authentication.

It should be understood that authentication for the user terminal includes: It is determined whether a current user terminal is a terminal device requiring authentication, for example, whether an identifier (Identity, ID) corresponding to the user terminal belongs to a group corresponding to a group ID, or whether the identifier corresponding to the user terminal is among one or more terminal device IDs received. Then, the first response parameter is verified. If verification succeeds, the authentication succeeds.

Optionally, the user terminal may calculate the first response parameter based on the foregoing challenge parameter or random character string and a stored key.

In this embodiment of this application, the first information from the second network function or the third network function is received by the first network function. The first network function sends the second information to the third network function based on the first information, where the second information includes the authentication information, and the authentication information includes the challenge parameter or the random character string. The third network function sends the third information to the access network device, where the third information includes any one of the authentication information, the challenge parameter, and the random character string. The access network device broadcasts the fourth information, where the fourth information includes any one of the authentication information, the challenge parameter, and the random character string. The user terminal receives the fourth information and sends the fifth information based on the fourth information, where the fifth information includes the first response parameter, and the first response parameter is generated based on the challenge parameter or the random character string. The first network function or the third network function receives the fifth information or the first response parameter and authenticates the user terminal based on the fifth information or the first response parameter. In this way, because the user terminal is authenticated based on the fourth information broadcast by the access network device, there is no need for the user terminal to access the network before authentication, so as to simplify a procedure of authenticating the user terminal and meet a capability requirement of authenticating the user terminal in AIoT. Therefore, in this embodiment of this application, authentication on the user terminal in the AIoT can be effectively implemented.

Optionally, in some embodiments, the first information includes at least one of a user identifier, a group identifier, a device identifier, and area information (for example, geographic area information or a tracking area identity list (TAI list)).

In this embodiment of this application, an identification identifier may be an identifier formed by truncating a part of a user identifier, a group identifier, or a device identifier, and is used by the user terminal to determine whether the user terminal is associated with the identifier.

Optionally, in some embodiments, the second information further includes at least one of a tag authentication indication and first target information. The first target information includes at least one of a user identifier, a group identifier, a device identifier, and area information.

It should be noted that in this embodiment of this application, the second information may include all content of the first information, or the second information may be generated based on the first information. For example, area information in the second information may be generated based on at least one of a user identifier, a group identifier, and a device identifier in the first information. In this case, the second information may include only the area information or includes the area information and a corresponding identifier. Alternatively, a corresponding identifier (that is, at least one of a user identifier, a group identifier, and a device identifier) may be obtained based on the area information in the first information. In this case, the second information may include only the obtained identifier, or may include the obtained identifier and area information (which is from the first information or derived from the area information in the first information, for example, the tracking area identity list derived from the geographic area information).

It should be noted that in some embodiments, before the first network function receives the first information from the second network function, the method further includes:
the second network function receives seventh information from an application function, where the seventh information includes at least one of a user identifier, a group identifier, a device identifier, and area information.

The first information is the seventh information or the first information is determined based on the seventh information.

In some embodiments, the method further includes at least one of the following:
the third network function determines the access network device based on the area information in a case that the second information includes the area information;
the third network function determines the access network device based on the user identifier in a case that the second information includes the user identifier;
the third network function determines the access network device based on the group identifier in a case that the second information includes the group identifier; and
the third network function determines the access network device based on the device identifier in a case that the second information includes the device identifier.

Optionally, in some embodiments, the third information further includes at least one of the tag authentication indication and second target information. The second target information includes at least one of a user identifier, a group identifier, a device identifier, and area information.

In this embodiment of this application, the target information is generated based on the first target information. For example, the area information may be generated based on various identifiers in the first target information, or a corresponding identifier (that is, at least one of a user identifier, a group identifier, or a device identifier) may be obtained based on the area information in the first target information.

Optionally, in some embodiments, in a case that the third information includes area information (for example, the tracking area identity list TAI list), that the access network device broadcasts the fourth information includes:
the access network device determines or selects a target cell based on the area information; and
the access network device broadcasts the fourth information in the target cell.

Optionally, in some embodiments, that the access network device broadcasts the fourth information includes:
the access network device broadcasts the fourth information based on the authentication information or the third information. For example, if a received message includes the authentication information, the fourth information is broadcast. Alternatively, the access network device is configured with a cell serving internet of things services. In a case that the authentication information or the third information is received, the fourth information is broadcast in the cell serving internet of things services.

In this embodiment of this application, the access network device may generate the fourth information to be broadcast based on the authentication information, and determine, based on other information in the third information, a specific cell in which the fourth information is to be broadcast.

Optionally, in some embodiments, the fourth information further includes at least one of a group identifier, a user identifier, a device identifier, and an identification identifier.

Optionally, in some embodiments, the fifth information further includes at least one target identifier associated with the user terminal. The target identifier includes at least one of the following: a group identifier, a user identifier, and a device identifier.

It should be noted that, in this embodiment of this application, in a case that the fourth information carries a group identifier, the fifth information may carry or not carry a group identifier; in a case that the fourth information carries a user identifier, the fifth information may carry or not carry a user identifier; and in a case that the fourth information carries a device identifier, the fifth information may carry or not carry a device identifier.

Optionally, in some embodiments, that the user terminal is authenticated based on the fifth information or the first response parameter includes:
the first network function sends the sixth information to the fourth network function, where the sixth information includes the challenge parameter or the random character string, and a target identifier associated with the user terminal;
the fourth network function sends the second response parameter or an authentication result to the first network function based on the sixth information; and
the first network function determines an authentication result based on the first response parameter and the second response parameter in a case that the fourth network function sends the second response parameter to the first network function.

The target identifier includes at least one of the following: a group identifier, a user identifier, and a device identifier.

In this embodiment of this application, the first network function is the AUSF, and the fourth network function is the UDM. A specific transmission behavior is as follows: The NEF/AF sends the first information to the AUSF, the AUSF sends the second information to the AMF, the AMF sends the third information to the access network device, and the access network device broadcasts the fourth information. The user terminal sends the fifth information or the first response parameter to the AMF, the AMF sends the fifth information or the first response parameter to the AUSF, the AUSF sends the sixth information to the UDM, and the UDM sends the authentication result or the second response parameter to the AUSF. In a case that the UDM sends the second response parameter to the AUSF, the AUSF performs authentication.

Optionally, in some embodiments, the authentication information is generated based on information not related to a user terminal, or the authentication information does not include a second response parameter, and the second response parameter is generated based on the challenge parameter or the random character string.

In this embodiment of this application, the authentication information is not generated based on information related to a user terminal. For example, the authentication information includes the challenge parameter or the random number described above, and further includes a network authentication parameter. However, the network authentication parameter is generated based on a group key or a network private key, or may be generated based on the group key or the network private key, and the challenge parameter or the random number described above. The second response parameter is used by the first network function to perform authentication on the user terminal. Specifically, the second response parameter may be calculated based on the challenge parameter or the random number, and a stored key or group key related to the user terminal.

Optionally, in some embodiments, the authentication information further includes the network authentication parameter, and the network authentication parameter is used by a user terminal to authenticate a network.

In this embodiment of this application, the network authentication parameter may be an authentication token (Authentication Token, AUTN) parameter generated by using a key corresponding to a group identifier or a user terminal identifier, or may be an authentication token generated by a network key (or a network key and the challenge parameter or the random number). The network key may be a key agreed upon between the network and an internet of things device operator (the key is downloaded or preconfigured onto an internet of things terminal by the IoT device operator), or may be a private key of the network (an internet of things terminal obtains a public key of the network in an offline manner and verifies a network parameter based on the public key). The terminal may verify, based on the AUTN parameter, whether the network is valid. Because the network authentication parameter is carried in the authentication information, authentication on the network by the terminal can be implemented, thereby improving communication security.

Optionally, in some embodiments, after the user terminal receives the fourth information, and sends the fifth information based on the fourth information, the method further includes:
the third network function receives the fifth information from the user terminal; and
the third network function sends the fifth information or the first response parameter to the first network function.

In this embodiment of this application, the third network function may also perform authentication on the user terminal. After receiving the fifth information, the third network function may authenticate the user terminal, and may send all or some of content in the fifth information to the first network function, so that the first network function performs authentication.

Optionally, in some embodiments, after the first network function authenticates the user terminal based on the fifth information or the first response parameter, the method further includes:
the first network function sends the authentication result to the third network function or the second network function.

In this embodiment of this application, after receiving the authentication result, the third network function may send the authentication result to the user terminal. In a case that the authentication result indicates successful authentication, the user terminal may perform subsequent operations of sending and receiving information, and the network runs the user terminal to receive and send a message.

Optionally, referring to FIG. 3, an embodiment of this application further provides an authentication processing method. As shown in FIG. 3, the authentication processing method includes the following steps.

Step 301: A user terminal sends fifth information based on fourth information in a case of receiving the fourth information broadcast by an access network device.

The fourth information includes any one of authentication information, a challenge parameter, and a random character string.

The fifth information includes a first response parameter, and the first response parameter is generated based on the challenge parameter or the random character string.

The authentication information includes the challenge parameter or the random character string.

Optionally, the fourth information further includes at least one of a group identifier, a user identifier, a device identifier, and an identification identifier, and the sending fifth information based on fourth information includes:
the user terminal sends the fifth information in a case that the user terminal is associated with at least one of the group identifier, the user identifier, the device identifier, and the identification identifier.

Optionally, the fifth information further includes at least one target identifier associated with the user terminal, and the target identifier includes at least one of the following: a group identifier, a user identifier, and a device identifier.

Optionally, the authentication information further includes a network authentication parameter, and the sending fifth information based on fourth information includes:
the user terminal authenticates a network based on the network authentication parameter in a case that the fourth information includes the authentication information; and
the user terminal sends the fifth information in a case of successful authentication.

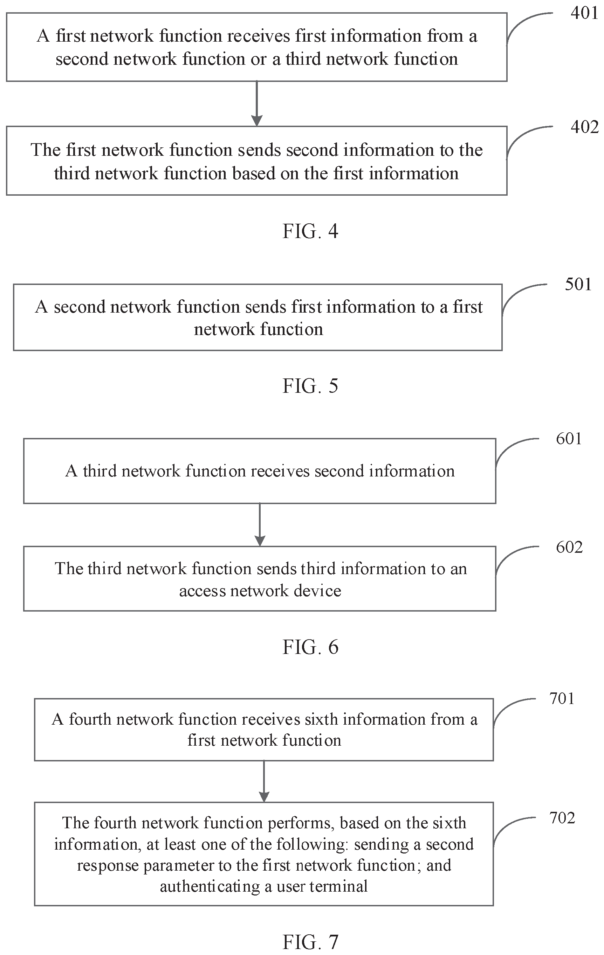

Referring to FIG. 4, an embodiment of this application further provides an authentication processing method. As shown in FIG. 4, the authentication processing method includes the following steps.

Step 401: A first network function receives first information from a second network function or a third network function.

Step 402: The first network function sends second information to the third network function based on the first information, where the second information includes authentication information, and the authentication information includes a challenge parameter or a random character string.

The authentication information is generated based on information not related to a user terminal, or the authentication information does not include a second response parameter.

Optionally, the first information includes at least one of a user identifier, a group identifier, a device identifier, and area information.

Optionally, the second information further includes at least one of a tag authentication indication and first target information. The first target information includes at least one of a user identifier, a group identifier, a device identifier, and area information.

Optionally, the authentication information further includes a network authentication parameter, and the network authentication parameter is used by a user terminal to authenticate a network.

Optionally, the network authentication parameter is generated based on information not related to a user terminal.

Optionally, the method further includes:
the first network function receives fifth information or a first response parameter from the user terminal, where the fifth information includes the first response parameter, and the first response parameter is generated based on the challenge parameter or the random character string; and
the first network function authenticates the user terminal based on the fifth information or the first response parameter.

Optionally, the method further includes:
the first network function receives the fifth information or the first response parameter from the user terminal, where the fifth information includes the first response parameter, and the first response parameter is generated based on the challenge parameter or the random character string;
the first network function sends sixth information to a fourth network function, where the sixth information includes the challenge parameter or the random character string, and a target identifier associated with the user terminal;
the first network function receives a second response parameter or an authentication result from the fourth network function, where the second response parameter or the authentication result is determined based on the sixth information; and
the first network function determines an authentication result based on the first response parameter and the second response parameter in a case that the first network function receives the second response parameter from the fourth network function.

The target identifier includes at least one of the following: a group identifier, a user identifier, and a device identifier.

Optionally, referring to FIG. 5, an embodiment of this application further provides an authentication processing method. As shown in FIG. 5, the authentication processing method includes the following steps.

Step 501: A second network function sends first information to a first network function, where the first information is used to trigger the first network function to send second information to a third network function, the second information includes authentication information, and the authentication information includes a challenge parameter or a random character string.

Optionally, the first information includes at least one of a user identifier, a group identifier, a device identifier, and area information.

Optionally, the second information further includes at least one of a tag authentication indication and first target information. The first target information includes at least one of a user identifier, a group identifier, a device identifier, and area information.

Optionally, the authentication information is generated based on information not related to a user terminal, or the authentication information does not include a second response parameter, and the second response parameter is generated based on the challenge parameter or the random character string.

Optionally, the authentication information further includes a network authentication parameter, and the network authentication parameter is used by a user terminal to authenticate a network.

Optionally, the network authentication parameter is generated based on information not related to a user terminal.

Optionally, referring to FIG. 6, an embodiment of this application further provides an authentication processing method. As shown in FIG. 6, the authentication processing method includes the following steps.

Step 601: A third network function receives second information, where the second information includes authentication information, and the authentication information includes a challenge parameter or a random character string.

Step 602: The third network function sends third information to an access network device, where the third information includes any one of the authentication information, the challenge parameter, and the random character string.

The second information is sent by a first network function or a fourth network function.

Optionally, the method further includes:
the third network function receives fifth information from a user terminal, where the fifth information includes a first response parameter, and the first response parameter is generated based on the challenge parameter or the random character string; and
the third network function sends the fifth information or the first response parameter to the first network function, or authenticates the user terminal based on the first response parameter.

Optionally, after the third network function sends the fifth information or the first response parameter to the first network function, the method further includes:
the third network function receives the authentication result from the first network function.

Optionally, before the third network function receives the second information, the method further includes:
the third network function sends first information to the first network function, where the first information is used to trigger the first network function to send the second information.

Optionally, the authentication information is generated based on information not related to a user terminal, or the authentication information does not include a second response parameter, and the second response parameter is generated based on the challenge parameter or the random character string.

Optionally, the second information further includes at least one of a tag authentication indication and first target information. The first target information includes at least one of a user identifier, a group identifier, a device identifier, and area information.

Optionally, the method further includes at least one of the following:
the third network function determines the access network device based on the area information in a case that the second information includes the area information;
the third network function determines the access network device based on the user identifier in a case that the second information includes the user identifier;
the third network function determines the access network device based on the group identifier in a case that the second information includes the group identifier; and
the third network function determines the access network device based on the device identifier in a case that the second information includes the device identifier.

Optionally, the third information further includes at least one of the tag authentication indication and second target information. The second target information includes at least one of a user identifier, a group identifier, a device identifier, and area information.

Optionally, the authentication information further includes a network authentication parameter, and the network authentication parameter is used by a user terminal to authenticate a network.

Optionally, the network authentication parameter is generated based on information not related to a user terminal.

Optionally, referring to FIG. 7, an embodiment of this application further provides an authentication processing method. As shown in FIG. 7, the authentication processing method includes the following steps.

Step 701: A fourth network function receives sixth information from a first network function, where the sixth information includes a challenge parameter or a random character string, and a target identifier associated with a user terminal.

Step 702: The fourth network function performs, based on the sixth information, at least one of the following:
sending a second response parameter to the first network function; and
authenticating the user terminal.

Optionally, after the user terminal is authenticated, the method further includes:
sending an authentication result to the first network function.

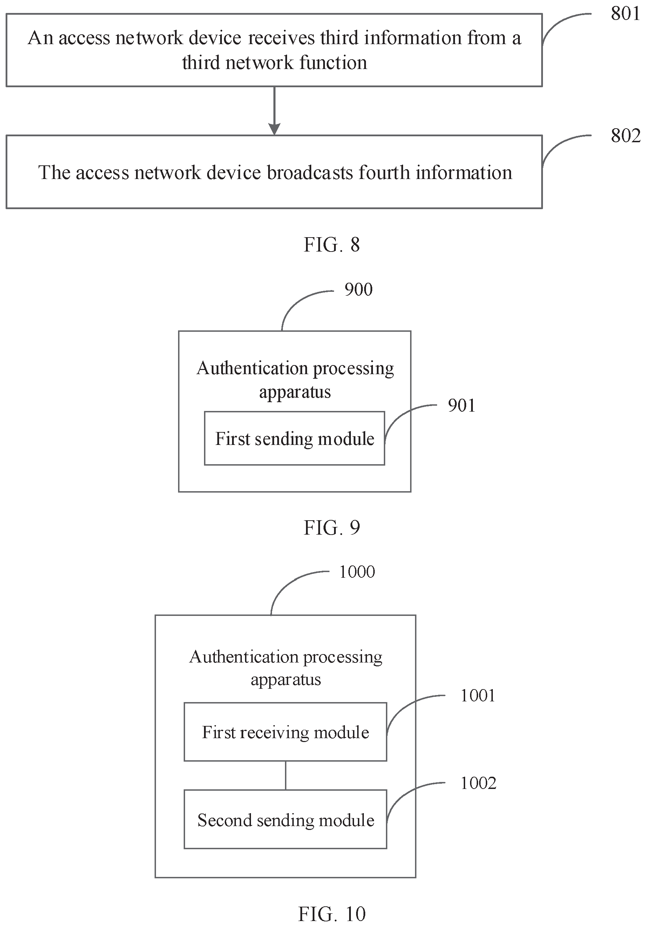

Optionally, referring to FIG. 8, an embodiment of this application further provides an authentication processing method. As shown in FIG. 8, the authentication processing method includes the following steps.

Step 801: An access network device receives third information from a third network function, where the third information includes any one of authentication information, a challenge parameter, and a random character string.

Step 802: The access network device broadcasts fourth information, where the fourth information includes any one of the authentication information, the challenge parameter, and the random character string.

The authentication information includes the challenge parameter or the random character string.

Optionally, that the access network device broadcasts the fourth information includes:
the access network device broadcasts the fourth information based on the authentication information or the third information.

Optionally, the fourth information further includes at least one of a group identifier, a user identifier, a device identifier, and an identification identifier.

Optionally, the third information further includes at least one of a tag authentication indication and second target information. The second target information includes at least one of a user identifier, a group identifier, a device identifier, and area information.

Optionally, in a case that the third information includes area information, that the access network device broadcasts the fourth information based on the third information includes:
the access network device determines or selects a target cell based on the area information; and
the access network device broadcasts the fourth information in the target cell.

Optionally, the authentication information is generated based on information not related to a user terminal, or the authentication information does not include a second response parameter, and the second response parameter is generated based on the challenge parameter or the random character string.

Optionally, the authentication information further includes a network authentication parameter, and the network authentication parameter is used by a user terminal to authenticate a network.

Optionally, the network authentication parameter is generated based on information not related to a user terminal.

An embodiment of this application further provides an authentication processing system, including a first network function, a second network function, a third network function, an access network device, and a user terminal.

The first network function is configured to receive first information from the second network function or the third network function, and send second information to the third network function based on the first information. The second information includes authentication information, and the authentication information includes a challenge parameter or a random character string.

The third network function is configured to send third information to the access network device. The third information includes any one of the authentication information, the challenge parameter, and the random character string.

The access network device is configured to broadcast fourth information. The fourth information includes any one of the authentication information, the challenge parameter, and the random character string.

The user terminal is configured to receive the fourth information, and send fifth information based on the fourth information. The fifth information includes a first response parameter, and the first response parameter is generated based on the challenge parameter or the random character string.

The first network function or the third network function is configured to receive the fifth information or the first response parameter, and authenticate the user terminal based on the fifth information or the first response parameter.

Optionally, the first information includes at least one of a user identifier, a group identifier, a device identifier, and area information.

Optionally, the second information further includes at least one of a tag authentication indication and first target information. The first target information includes at least one of a user identifier, a group identifier, a device identifier, and area information.

Optionally, the third network function is further configured to perform at least one of the following:
determining the access network device based on the area information in a case that the second information includes the area information;
determining the access network device based on the user identifier in a case that the second information includes the user identifier;
determining the access network device based on the group identifier in a case that the second information includes the group identifier; and
determining the access network device based on the device identifier in a case that the second information includes the device identifier.

Optionally, the third information further includes at least one of the tag authentication indication and second target information. The second target information includes at least one of a user identifier, a group identifier, a device identifier, and area information.

Optionally, in a case that the third information includes the area information, the access network device is specifically configured to:
determine or select a target cell based on the area information; and
broadcast the fourth information in the target cell.

Optionally, the access network device is specifically configured to:
broadcast the fourth information based on the authentication information or the third information.

Optionally, the fourth information further includes at least one of a group identifier, a user identifier, a device identifier, and an identification identifier.

Optionally, the fifth information further includes at least one target identifier associated with the user terminal, and the target identifier includes at least one of the following: a group identifier, a user identifier, and a device identifier.

Optionally, the authentication processing system further includes a fourth network function.

The first network function is specifically configured to send sixth information to the fourth network function. The sixth information includes the challenge parameter or the random character string, and a target identifier associated with the user terminal.

The fourth network function is configured to send a second response parameter or an authentication result to the first network function based on the sixth information.

The first network function is configured to determine an authentication result based on the first response parameter and the second response parameter in a case that the fourth network function sends the second response parameter to the first network function.

The target identifier includes at least one of the following: a group identifier, a user identifier, and a device identifier.

Optionally, the authentication information is generated based on information not related to a user terminal, or the authentication information does not include a second response parameter, and the second response parameter is generated based on the challenge parameter or the random character string.

Optionally, the authentication information further includes a network authentication parameter, and the network authentication parameter is used by a user terminal to authenticate a network.

Optionally, the network authentication parameter is generated based on information not related to a user terminal.

Optionally, the third network function is further configured to receive the fifth information from the user terminal; and send the fifth information or the first response parameter to the first network function.

Optionally, the first network function is further configured to send the authentication result to the third network function or the second network function.

The authentication processing method provided in the embodiments of this application may be performed by an authentication processing apparatus. The authentication processing apparatus provided in the embodiments of this application is described by using an example in which the authentication processing apparatus performs the authentication processing method in the embodiments of this application.

Referring to FIG. 9, an embodiment of this application further provides an authentication processing apparatus. As shown in FIG. 9, the authentication processing apparatus 900 includes:
a first sending module 901, configured to send fifth information based on fourth information in a case that the fourth information broadcast by an access network device is received.

The fourth information includes any one of authentication information, a challenge parameter, and a random character string.

The fifth information includes a first response parameter, and the first response parameter is generated based on the challenge parameter or the random character string.

The authentication information includes the challenge parameter or the random character string.

Optionally, the fourth information further includes at least one of a group identifier, a user identifier, a device identifier, and an identification identifier. The first sending module 901 is specifically configured to send the fifth information in a case that a user terminal is associated with the at least one of the group identifier, the user identifier, the device identifier, and the identification identifier.

Optionally, the fifth information further includes at least one target identifier associated with the user terminal, and the target identifier includes at least one of the following: a group identifier, a user identifier, and a device identifier.

Optionally, the authentication information further includes a network authentication parameter, and the first sending module 901 is specifically configured to:
authenticate a network based on the network authentication parameter in a case that the fourth information includes the authentication information; and
send the fifth information in a case of successful authentication.

Referring to FIG. 10, an embodiment of this application further provides an authentication processing apparatus. As shown in FIG. 10, the authentication processing apparatus 1000 includes:
a first receiving module 1001, configured to receive first information from a second network function or a third network function; and
a second sending module 1002, configured to send second information to the third network function based on the first information, where the second information includes authentication information, and the authentication information includes a challenge parameter or a random character string.

The first receiving module 1001 is further configured to receive fifth information or a first response parameter from a user terminal. The fifth information includes the first response parameter, and the first response parameter is generated based on the challenge parameter or the random character string.

The authentication information is generated based on information not related to a user terminal, or the authentication information does not include a second response parameter.

Optionally, the first information includes at least one of a user identifier, a group identifier, a device identifier, and area information.

Optionally, the second information further includes at least one of a tag authentication indication and first target information. The first target information includes at least one of a user identifier, a group identifier, a device identifier, and area information.

Optionally, the authentication information further includes a network authentication parameter, and the network authentication parameter is used by a user terminal to authenticate a network.

Optionally, the network authentication parameter is generated based on information not related to a user terminal.

Optionally, the authentication processing apparatus 1000 further includes a first authentication module.

The first receiving module 1001 is further configured to receive the fifth information or the first response parameter from the user terminal. The fifth information includes the first response parameter, and the first response parameter is generated based on the challenge parameter or the random character string.

The first authentication module is configured to authenticate the user terminal based on the fifth information or the first response parameter.

Optionally, the authentication processing apparatus 1000 further includes the first authentication module.

The first receiving module 1001 is further configured to receive the fifth information or the first response parameter from the user terminal. The fifth information includes the first response parameter, and the first response parameter is generated based on the challenge parameter or the random character string.

The second sending module 1002 is further configured to send sixth information to a fourth network function. The sixth information includes the challenge parameter or the random character string, and a target identifier associated with the user terminal.

The first receiving module 1001 is further configured to receive a second response parameter or an authentication result from the fourth network function. The second response parameter or the authentication result is determined based on the sixth information.

The first authentication module is configured to determine an authentication result based on the first response parameter and the second response parameter in a case that the second response parameter from the fourth network function is received.

The second response parameter is generated based on the challenge parameter or the random character string, and the target identifier includes at least one of the following: a group identifier, a user identifier, and a device identifier.

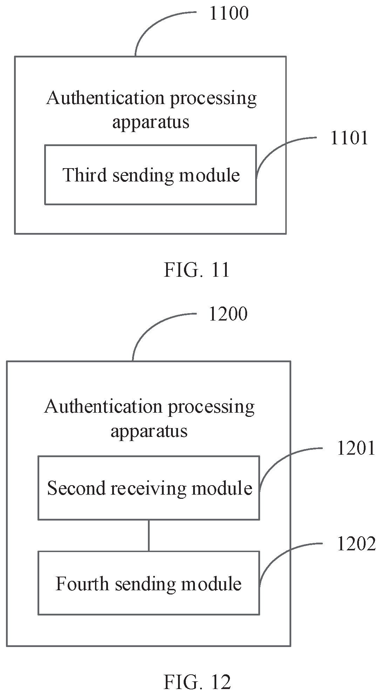

Referring to FIG. 11, an embodiment of this application further provides an authentication processing apparatus. As shown in FIG. 11, the authentication processing apparatus 1100 includes:
a third sending module 1101, configured to send first information to a first network function. The first information is used to trigger the first network function to send second information to a third network function, the second information includes authentication information, and the authentication information includes a challenge parameter or a random character string.

Optionally, the first information includes at least one of a user identifier, a group identifier, a device identifier, and area information.

Optionally, the second information further includes at least one of a tag authentication indication and first target information. The first target information includes at least one of a user identifier, a group identifier, a device identifier, and area information.

Optionally, the authentication information is generated based on information not related to a user terminal, or the authentication information does not include a second response parameter, and the second response parameter is generated based on the challenge parameter or the random character string.

Optionally, the authentication information further includes a network authentication parameter, and the network authentication parameter is used by a user terminal to authenticate a network.

Optionally, the network authentication parameter is generated based on information not related to a user terminal.

Referring to FIG. 12, an embodiment of this application further provides an authentication processing apparatus. As shown in FIG. 12, the authentication processing apparatus 1200 includes:
a second receiving module 1201, configured to receive second information, where the second information includes authentication information, and the authentication information includes a challenge parameter or a random character string; and
a fourth sending module 1202, configured to send third information to an access network device, where the third information includes any one of the authentication information, the challenge parameter, and the random character string.

The second information is sent by a first network function or a fourth network function.

Optionally, the authentication processing apparatus 1200 further includes a second execution module.

The second receiving module 1201 is further configured to receive fifth information from a user terminal. The fifth information includes a first response parameter, and the first response parameter is generated based on the challenge parameter or the random character string.

The second execution module is configured to send the fifth information or the first response parameter to the first network function, or authenticate the user terminal based on the first response parameter.

Optionally, the second receiving module 1201 is further configured to receive an authentication result from the first network function.

Optionally, the fourth sending module 1202 is further configured to send first information to the first network function. The first information is used to trigger the first network function to send the second information.

Optionally, the authentication information is generated based on information not related to a user terminal, or the authentication information does not include a second response parameter, and the second response parameter is generated based on the challenge parameter or the random character string.

Optionally, the second information further includes at least one of a tag authentication indication and first target information. The first target information includes at least one of a user identifier, a group identifier, a device identifier, and area information.

Optionally, the authentication processing apparatus 1200 further includes a determining module, configured to perform at least one of the following:
determining the access network device based on the area information in a case that the second information includes the area information;
determining the access network device based on the user identifier in a case that the second information includes the user identifier;
determining the access network device based on the group identifier in a case that the second information includes the group identifier; and
determining the access network device based on the device identifier in a case that the second information includes the device identifier.

Optionally, the third information further includes at least one of the tag authentication indication and second target information. The second target information includes at least one of a user identifier, a group identifier, a device identifier, and area information.

Optionally, the authentication information further includes a network authentication parameter, and the network authentication parameter is used by a user terminal to authenticate a network.

Optionally, the network authentication parameter is generated based on information not related to a user terminal.

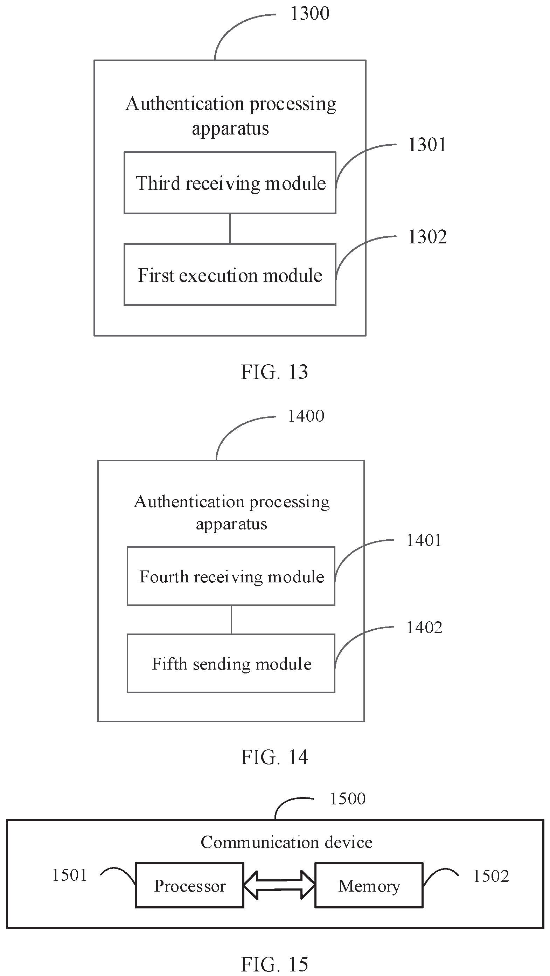

Referring to FIG. 13, an embodiment of this application further provides an authentication processing apparatus. As shown in FIG. 13, the authentication processing apparatus 1300 includes:
a third receiving module 1301, configured to receive sixth information from a first network function, where the sixth information includes a challenge parameter or a random character string, and a target identifier associated with the user terminal; and
a first execution module 1302, configured to perform, based on the sixth information, at least one of the following:
   sending a second response parameter to the first network function; and
   authenticating the user terminal.

Optionally, the first execution module 1302 is further configured to send an authentication result to the first network function.

Referring to FIG. 14, an embodiment of this application further provides an authentication processing apparatus. As shown in FIG. 14, the authentication processing apparatus 1400 includes:
a fourth receiving module 1401, configured to receive third information from a third network function, where the third information includes any one of authentication information, a challenge parameter, and a random character string; and
a fifth sending module 1402, configured to broadcast fourth information, where the fourth information includes any one of the authentication information, the challenge parameter, and the random character string.

The authentication information includes the challenge parameter or the random character string.

Optionally, the fifth sending module 1402 is specifically configured to:
broadcast the fourth information based on the authentication information or the third information.

Optionally, the fourth information further includes at least one of a group identifier, a user identifier, a device identifier, and an identification identifier.

Optionally, the third information further includes at least one of a tag authentication indication and second target information. The second target information includes at least one of a user identifier, a group identifier, a device identifier, and area information.

Optionally, in a case that the third information includes area information, the fifth sending module 1402 is specifically configured to:
determine or select a target cell based on the area information; and
broadcast the fourth information in the target cell.

Optionally, the authentication information is generated based on information not related to a user terminal, or the authentication information does not include a second response parameter, and the second response parameter is generated based on the challenge parameter or the random character string.

Optionally, the authentication information further includes a network authentication parameter, and the network authentication parameter is used by a user terminal to authenticate a network.

Optionally, the network authentication parameter is generated based on information not related to a user terminal.

The authentication processing apparatus in this embodiment of this application may be an electronic device, for example, an electronic device with an operating system, or may be a component in an electronic device, for example, an integrated circuit or a chip. The electronic device may be a terminal, or may be a device other than the terminal. For example, the terminal may include but is not limited to the foregoing listed types of the terminal 11. The another device may be a server, a network attached storage (Network Attached Storage, NAS), or the like. This is not specifically limited in this embodiment of this application.

The authentication processing apparatus provided in this embodiment of this application can implement the processes implemented in the method embodiments of FIG. 3 to FIG. 8, and achieve same technical effects. To avoid repetition, details are not described herein again.

As shown in FIG. 15, an embodiment of this application further provides a communication device 1500, including a processor 1501 and a memory 1502. The memory 1502 stores a program or instructions capable of running on the processor 1501. The program or the instructions are executed by the processor 1501 to implement the steps in the foregoing embodiment of the authentication processing method, and same technical effects can be achieved. To avoid repetition, details are not described herein again.

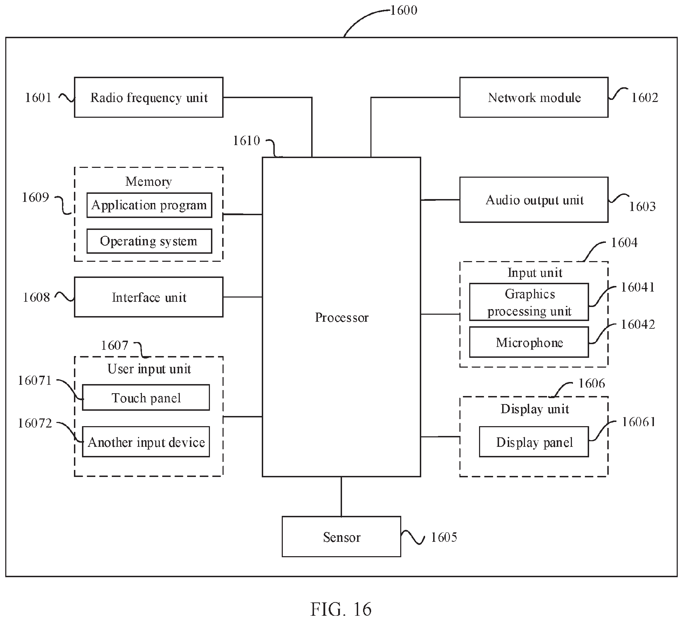

An embodiment of this application further provides a terminal, including a processor and a communication interface. The communication interface is coupled to the processor. The processor is configured to run a program or instructions to implement the steps in the method embodiment shown in FIG. 3. The terminal embodiment corresponds to the foregoing terminal-side method embodiment. Each implementation process and implementation of the foregoing method embodiment may be applied to the terminal embodiment, and same technical effects can be achieved. Specifically, FIG. 16 is a schematic diagram of a hardware structure of a terminal for implementing an embodiment of this application.

The terminal 1600 includes but is not limited to at least some components in a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art may understand that the terminal 1600 may further include a power supply (for example, a battery) that supplies power to each component. The power supply may be logically connected to the processor 1610 by using a power management system, to implement functions such as charging management, discharging management, and power consumption management through the power management system. The structure of the terminal shown in FIG. 16 does not constitute a limitation on the terminal. The terminal may include more or fewer components than those shown in the figure, or combine some components, or have different component arrangements. Details are not described herein again.

It should be understood that in this embodiment of this application, the input unit 1604 may include a graphics processing unit (Graphics Processing Unit, GPU) 16041 and a microphone 16042. The graphics processing unit 16041 processes image data of a still picture or a video obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, or the like. The user input unit 1607 includes at least one of a touch panel 16071 and another input device 16072. The touch panel 16071 is also referred to as a touchscreen. The touch panel 16071 may include two parts: a touch detection apparatus and a touch controller. The another input device 16072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 1601 may transmit the downlink data to the processor 1610 for processing. In addition, the radio frequency unit 1601 may send uplink data to the network side device. Generally, the radio frequency unit 1601 includes but is not limited to an antenna, an amplifier, a transceiver, a coupler, a low-noise amplifier, a duplexer, and the like.

The memory 1609 may be configured to store a software program or instructions and various types of data. The memory 1609 may mainly include a first storage area for storing a program or instructions and a second storage area for storing data. The first storage area may store an operating system, an application program or instructions required by at least one function (for example, a sound play function or an image play function), and the like. In addition, the memory 1609 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 in this embodiment of this application includes but is not limited to these memories and any other suitable type of memory.

The processor 1610 may include one or more processing units. Optionally, the processor 1610 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 1610.

The radio frequency unit 1601 is configured to send fifth information based on fourth information in a case that the fourth information broadcast by an access network device is received.

The fourth information includes any one of authentication information, a challenge parameter, and a random character string.

The fifth information includes a first response parameter, and the first response parameter is generated based on the challenge parameter or the random character string.

The authentication information includes the challenge parameter or the random character string.

It may be understood that for implementation processes of the implementations mentioned in this embodiment, reference may be made to related descriptions in the method embodiment for the user terminal side, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 8. The network side device embodiment corresponds to the foregoing method embodiment for the network side device. Each implementation process and implementation of the foregoing method embodiment may be applied to the network side device embodiment, and the same technical effects can be achieved.

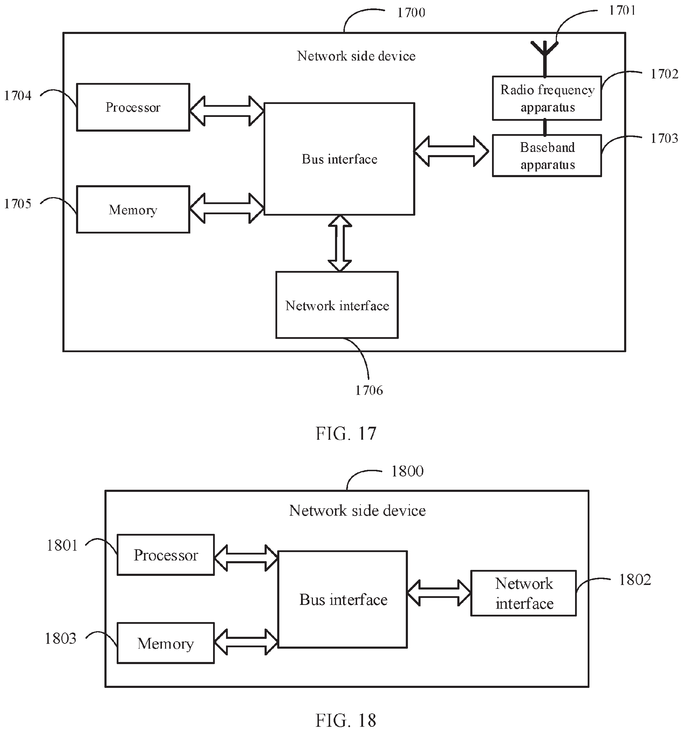

Specifically, an embodiment of this application further provides a network side device. As shown in FIG. 17, a network side device 1700 includes an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information by using the antenna 1701, and sends received information to the baseband apparatus 1703 for processing. In a downlink direction, the baseband apparatus 1703 processes to-be-sent information, and sends processed information to the radio frequency apparatus 1702. After processing received information, the radio frequency apparatus 1702 sends processed information by using the antenna 1701.

The method performed by the network side device in the foregoing embodiment may be implemented in the baseband apparatus 1703. The baseband apparatus 1703 includes a baseband processor.

For example, the baseband apparatus 1703 may include at least one baseband board. A plurality of chips are disposed on the baseband board. As shown in FIG. 17, one of the chips is, for example, the baseband processor, and is connected to the memory 1705 by using a bus interface, to invoke a program in the memory 1705 to perform an operation of a network device shown in the foregoing method embodiment.

The network side device may further include a network interface 1706, and the interface is, for example, a common public radio interface (Common Public Radio Interface, CPRI).

Specifically, the network side device 1700 in this embodiment of this application further includes instructions or a program stored in the memory 1705 and capable of running on the processor 1704. The processor 1704 invokes the instructions or the program in the memory 1705 to perform the method performed by the modules shown in FIG. 14, and same technical effects are achieved. To avoid repetition, details are not described herein again.

Specifically, an embodiment of this application further provides a network side device. As shown in FIG. 18, a network side device 1800 includes a processor 1801, a network interface 1802, and a memory 1803. The network interface 1802 is, for example, a common public radio interface (common public radio interface, CPRI).

Specifically, the network side device 1800 in this embodiment of this application further includes instructions or a program stored in the memory 1803 and capable of running on the processor 1801. The processor 1801 invokes the instructions or the program in the memory 1803 to perform the method performed by the modules shown in FIG. 10 to FIG. 13, and same technical effects are achieved. To avoid repetition, details are not described herein again.

An embodiment of this application further provides a readable storage medium. The readable storage medium stores a program or instructions. The program or the instructions are executed by a processor to implement the processes in the embodiments of the authentication processing method, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the embodiments of the foregoing authentication processing method, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the embodiments of the foregoing authentication processing method, and achieve the same technical effects. To avoid repetition, details are not described herein again.

An embodiment of this application further provides a wireless communication system, including a terminal and a network side device. The terminal may be configured to perform the steps of the foregoing authentication processing method on the user terminal side, and the network side device may be configured to perform the steps of the foregoing authentication processing method on the network side device.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples can be combined in other examples.

According to the foregoing descriptions of the implementations, a person skilled in the art may clearly understand that the methods in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An authentication processing method, comprising:
receiving, by a first network function, first information from a second network function or a third network function;
sending, by the first network function, second information to the third network function based on the first information, wherein the second information comprises authentication information, and the authentication information comprises a challenge parameter or a random character string;
sending, by the third network function, third information to an access network device, wherein the third information comprises any one of the authentication information, the challenge parameter, and the random character string;
broadcasting, by the access network device, fourth information, wherein the fourth information comprises any one of the authentication information, the challenge parameter, and the random character string;
receiving, by a user terminal, the fourth information, and sending fifth information based on the fourth information, wherein the fifth information comprises a first response parameter, and the first response parameter is generated based on the challenge parameter or the random character string; and
receiving, by the first network function or the third network function, the fifth information or the first response parameter, and authenticating the user terminal based on the fifth information or the first response parameter.

2. The method according to claim 1, wherein the first information comprises at least one of a user identifier, a group identifier, a device identifier, and area information.

3. The method according to claim 1 or 2, wherein the second information further comprises at least one of a tag authentication indication and first target information, and the first target information comprises at least one of a user identifier, a group identifier, a device identifier, and area information.

4. The method according to claim 3, wherein the method further comprises at least one of the following:
determining, by the third network function, the access network device based on the area information in a case that the second information comprises the area information;
determining, by the third network function, the access network device based on the user identifier in a case that the second information comprises the user identifier;
determining, by the third network function, the access network device based on the group identifier in a case that the second information comprises the group identifier; and
determining, by the third network function, the access network device based on the device identifier in a case that the second information comprises the device identifier.

5. The method according to any one of claims 1 to 4, wherein the third information further comprises at least one of the tag authentication indication and second target information, and the second target information comprises at least one of a user identifier, a group identifier, a device identifier, and area information.

6. The method according to claim 5, wherein in a case that the third information comprises area information, the broadcasting, by the access network device, fourth information comprises:
determining or selecting, by the access network device, a target cell based on the area information; and
broadcasting, by the access network device, the fourth information in the target cell.

7. The method according to any one of claims 1 to 6, wherein the broadcasting, by the access network device, fourth information comprises:
broadcasting, by the access network device, the fourth information based on the authentication information or the third information.

8. The method according to any one of claims 1 to 7, wherein the fourth information further comprises at least one of a group identifier, a user identifier, a device identifier, and an identification identifier.

9. The method according to any one of claims 1 to 8, wherein the fifth information further comprises at least one target identifier associated with the user terminal, and the target identifier comprises at least one of the following: a group identifier, a user identifier, and a device identifier.

10. The method according to claim 1 or 9, wherein the authenticating the user terminal based on the fifth information or the first response parameter comprises:
sending, by the first network function, sixth information to a fourth network function, wherein the sixth information comprises the challenge parameter or the random character string, and a target identifier associated with the user terminal;
sending, by the fourth network function, a second response parameter or an authentication result to the first network function based on the sixth information; and
determining, by the first network function, an authentication result based on the first response parameter and the second response parameter in a case that the fourth network function sends the second response parameter to the first network function, wherein
the target identifier comprises at least one of the following: a group identifier, a user identifier, and a device identifier.

11. The method according to any one of claims 1 to 10, wherein the authentication information is generated based on information not related to a user terminal, or the authentication information does not comprise a second response parameter, and the second response parameter is generated based on the challenge parameter or the random character string.

12. The method according to any one of claims 1 to 11, wherein the authentication information further comprises a network authentication parameter, and the network authentication parameter is used by a user terminal to authenticate a network.

13. The method according to claim 12, wherein the network authentication parameter is generated based on information not related to a user terminal.

14. The method according to any one of claims 1 to 13, wherein after the receiving, by a user terminal, the fourth information, and sending fifth information based on the fourth information, the method further comprises:
receiving, by the third network function, the fifth information from the user terminal; and
sending, by the third network function, the fifth information or the first response parameter to the first network function.

15. The method according to any one of claims 1 to 14, wherein after the first network function authenticates the user terminal based on the fifth information or the first response parameter, the method further comprises:
sending, by the first network function, an authentication result to the third network function or the second network function.

16. An authentication processing method, comprising:
sending, by a user terminal, fifth information based on fourth information in a case of receiving the fourth information broadcast by an access network device, wherein
the fourth information comprises any one of authentication information, a challenge parameter, and a random character string;
the fifth information comprises a first response parameter, and the first response parameter is generated based on the challenge parameter or the random character string; and
the authentication information comprises the challenge parameter or the random character string.

17. The method according to claim 16, wherein the fourth information further comprises at least one of a group identifier, a user identifier, a device identifier, and an identification identifier, and the sending fifth information based on fourth information comprises:
sending, by the user terminal, the fifth information in a case that the user terminal is associated with at least one of the group identifier, the user identifier, the device identifier, and the identification identifier.

18. The method according to claim 16 or 17, wherein the fifth information further comprises at least one target identifier associated with the user terminal, and the target identifier comprises at least one of the following: a group identifier, a user identifier, and a device identifier.

19. The method according to any one of claims 16 to 18, wherein the authentication information further comprises a network authentication parameter, and the sending fifth information based on fourth information comprises:
authenticating, by the user terminal, a network based on the network authentication parameter in a case that the fourth information comprises the authentication information; and
sending, by the user terminal, the fifth information in a case of successful authentication.

20. An authentication processing method, comprising:
receiving, by a first network function, first information from a second network function or a third network function; and
sending, by the first network function, second information to the third network function based on the first information, wherein the second information comprises authentication information, and the authentication information comprises a challenge parameter or a random character string, wherein
the authentication information is generated based on information not related to a user terminal, or the authentication information does not comprise a second response parameter.

21. The method according to claim 20, wherein the first information comprises at least one of a user identifier, a group identifier, a device identifier, and area information.

22. The method according to claim 20 or 21, wherein the second information further comprises at least one of a tag authentication indication and first target information, and the first target information comprises at least one of a user identifier, a group identifier, a device identifier, and area information.

23. The method according to any one of claims 20 to 22, wherein the authentication information further comprises a network authentication parameter, and the network authentication parameter is used by a user terminal to authenticate a network.

24. The method according to claim 23, wherein the network authentication parameter is generated based on information not related to a user terminal.

25. The method according to any one of claims 20 to 24, wherein the method further comprises:
receiving, by the first network function, fifth information or a first response parameter from a user terminal, wherein the fifth information comprises the first response parameter, and the first response parameter is generated based on the challenge parameter or the random character string; and
authenticating, by the first network function, the user terminal based on the fifth information or the first response parameter.

26. The method according to any one of claims 20 to 25, wherein the method further comprises:
receiving, by the first network function, the fifth information or the first response parameter from the user terminal, wherein the fifth information comprises the first response parameter, and the first response parameter is generated based on the challenge parameter or the random character string;
sending, by the first network function, sixth information to a fourth network function, wherein the sixth information comprises the challenge parameter or the random character string, and a target identifier associated with the user terminal;
receiving, by the first network function, a second response parameter or an authentication result from the fourth network function, wherein the second response parameter or the authentication result is determined based on the sixth information; and
determining, by the first network function, an authentication result based on the first response parameter and the second response parameter in a case that the first network function receives the second response parameter from the fourth network function, wherein
the second response parameter is generated based on the challenge parameter or the random character string, and the target identifier comprises at least one of the following: a group identifier, a user identifier, and a device identifier.

27. An authentication processing method, comprising:
sending, by a second network function, first information to a first network function, wherein the first information is used to trigger the first network function to send second information to a third network function, the second information comprises authentication information, and the authentication information comprises a challenge parameter or a random character string.

28. The method according to claim 27, wherein the first information comprises at least one of a user identifier, a group identifier, a device identifier, and area information.

29. The method according to claim 27 or 28, wherein the second information further comprises at least one of a tag authentication indication and first target information, and the first target information comprises at least one of a user identifier, a group identifier, a device identifier, and area information.

30. The method according to any one of claims 27 to 29, wherein the authentication information is generated based on information not related to a user terminal, or the authentication information does not comprise a second response parameter, and the second response parameter is generated based on the challenge parameter or the random character string.

31. The method according to any one of claims 27 to 30, wherein the authentication information further comprises a network authentication parameter, and the network authentication parameter is used by a user terminal to authenticate a network.

32. The method according to claim 31, wherein the network authentication parameter is generated based on information not related to a user terminal.

33. An authentication processing method, comprising:
receiving, by a third network function, second information, wherein the second information comprises authentication information, and the authentication information comprises a challenge parameter or a random character string; and
sending, by the third network function, third information to an access network device, wherein the third information comprises any one of the authentication information, the challenge parameter, and the random character string, wherein
the second information is sent by a first network function or a fourth network function.

34. The method according to claim 33, wherein the method further comprises:
receiving, by the third network function, fifth information from a user terminal, wherein the fifth information comprises a first response parameter, and the first response parameter is generated based on the challenge parameter or the random character string; and
sending, by the third network function, the fifth information or the first response parameter to the first network function, or authenticating the user terminal based on the first response parameter.

35. The method according to claim 34, wherein after the sending, by the third network function, the fifth information or the first response parameter to the first network function, the method further comprises:
receiving, by the third network function, an authentication result from the first network function.

36. The method according to any one of claims 33 to 35, wherein before the receiving, by a third network function, second information, the method further comprises:
sending, by the third network function, first information to the first network function, wherein the first information is used to trigger the first network function to send the second information.

37. The method according to any one of claims 33 to 36, wherein the authentication information is generated based on information not related to a user terminal, or the authentication information does not comprise a second response parameter, and the second response parameter is generated based on the challenge parameter or the random character string.

38. The method according to any one of claims 33 to 37, wherein the second information further comprises at least one of a tag authentication indication and first target information, and the first target information comprises at least one of a user identifier, a group identifier, a device identifier, and area information.

39. The method according to claim 38, wherein the method further comprises at least one of the following:
determining, by the third network function, the access network device based on the area information in a case that the second information comprises the area information;
determining, by the third network function, the access network device based on the user identifier in a case that the second information comprises the user identifier;
determining, by the third network function, the access network device based on the group identifier in a case that the second information comprises the group identifier; and
determining, by the third network function, the access network device based on the device identifier in a case that the second information comprises the device identifier.

40. The method according to any one of claims 33 to 39, wherein the third information further comprises at least one of the tag authentication indication and second target information, and the second target information comprises at least one of a user identifier, a group identifier, a device identifier, and area information.

41. The method according to any one of claims 33 to 40, wherein the authentication information further comprises a network authentication parameter, and the network authentication parameter is used by a user terminal to authenticate a network.

42. The method according to claim 41, wherein the network authentication parameter is generated based on information not related to a user terminal.

43. An authentication processing method, comprising:
receiving, by a fourth network function, sixth information from a first network function, wherein the sixth information comprises a challenge parameter or a random character string, and a target identifier associated with a user terminal; and
performing, by the fourth network function based on the sixth information, at least one of the following:
sending a second response parameter to the first network function; and
authenticating the user terminal.

44. The method according to claim 43, wherein after the authenticating the user terminal, the method further comprises:
sending an authentication result to the first network function.

45. An authentication processing method, comprising:
receiving, by an access network device, third information from a third network function, wherein the third information comprises any one of authentication information, a challenge parameter, and a random character string; and
broadcasting, by the access network device, fourth information, wherein the fourth information comprises any one of the authentication information, the challenge parameter, and the random character string; wherein
the authentication information comprises the challenge parameter or the random character string.

46. The method according to claim 45, wherein the broadcasting, by the access network device, fourth information comprises:
broadcasting, by the access network device, the fourth information based on the authentication information or the third information.

47. The method according to claim 45 or 46, wherein the fourth information further comprises at least one of a group identifier, a user identifier, a device identifier, and an identification identifier.

48. The method according to any one of claims 45 to 47, wherein the third information further comprises at least one of a tag authentication indication and second target information, and the second target information comprises at least one of a user identifier, a group identifier, a device identifier, and area information.

49. The method according to claim 48, wherein in a case that the third information comprises area information, the broadcasting, by the access network device, the fourth information based on the third information comprises:
determining or selecting, by the access network device, a target cell based on the area information; and
broadcasting, by the access network device, the fourth information in the target cell.

50. The method according to any one of claims 45 to 48, wherein the authentication information is generated based on information not related to a user terminal, or the authentication information does not comprise a second response parameter, and the second response parameter is generated based on the challenge parameter or the random character string.

51. The method according to any one of claims 45 to 50, wherein the authentication information further comprises a network authentication parameter, and the network authentication parameter is used by a user terminal to authenticate a network.

52. The method according to claim 51, wherein the network authentication parameter is generated based on information not related to a user terminal.

53. An authentication processing system, comprising a first network function, a second network function, a third network function, an access network device, and a user terminal, wherein
the first network function is configured to receive first information from the second network function or the third network function, and send second information to the third network function based on the first information, wherein the second information comprises authentication information, and the authentication information comprises a challenge parameter or a random character string;
the third network function is configured to send third information to the access network device, wherein the third information comprises any one of the authentication information, the challenge parameter, and the random character string;
the access network device is configured to broadcast fourth information, wherein the fourth information comprises any one of the authentication information, the challenge parameter, and the random character string;
the user terminal is configured to receive the fourth information, and send fifth information based on the fourth information, wherein the fifth information comprises a first response parameter, and the first response parameter is generated based on the challenge parameter or the random character string; and
the first network function or the third network function is configured to receive the fifth information or the first response parameter, and authenticate the user terminal based on the fifth information or the first response parameter.

54. An authentication processing apparatus, comprising:
a first sending module, configured to send fifth information based on fourth information in a case that the fourth information broadcast by an access network device is received; wherein
the fourth information comprises any one of authentication information, a challenge parameter, and a random character string;
the fifth information comprises a first response parameter, and the first response parameter is generated based on the challenge parameter or the random character string; and
the authentication information comprises the challenge parameter or the random character string.

55. An authentication processing apparatus, comprising:
a first receiving module, configured to receive first information from a second network function or a third network function; and
a second sending module, configured to send second information to the third network function based on the first information, wherein the second information comprises authentication information, and the authentication information comprises a challenge parameter or a random character string, wherein
the authentication information is generated based on information not related to a user terminal, or the authentication information does not comprise a second response parameter.

56. An authentication processing apparatus, comprising:
a third sending module, configured to send first information to a first network function, wherein the first information is used to trigger the first network function to send second information to a third network function, the second information comprises authentication information, and the authentication information comprises a challenge parameter or a random character string.

57. An authentication processing apparatus, comprising:
a second receiving module, configured to receive second information, wherein the second information comprises authentication information, and the authentication information comprises a challenge parameter or a random character string; and
a fourth sending module, configured to send third information to an access network device, wherein the third information comprises any one of the authentication information, the challenge parameter, and the random character string, wherein
the second information is sent by a first network function or a fourth network function.

58. An authentication processing apparatus, comprising:
a third receiving module, configured to receive sixth information from a first network function, wherein the sixth information comprises a challenge parameter or a random character string, and a target identifier associated with a user terminal; and
a first execution module, configured to perform, based on the sixth information, at least one of the following:
sending a second response parameter to the first network function; and
authenticating the user terminal.

59. An authentication processing apparatus, comprising:
a fourth receiving module, configured to receive third information from a third network function, wherein the third information comprises any one of authentication information, a challenge parameter, and a random character string; and
a fifth sending module, configured to broadcast fourth information, wherein the fourth information comprises any one of the authentication information, the challenge parameter, and the random character string, wherein
the authentication information comprises the challenge parameter or the random character string.

60. A terminal, comprising a processor and a memory, wherein the memory stores a program or instructions capable of running on the processor, and the program or instructions are executed by the processor to implement the steps of the authentication processing method according to any one of claims 16 to 19.

61. A network side device, comprising a processor and a memory, wherein the memory stores a program or instructions capable of running on the processor, and the program or instructions are executed by the processor to implement the steps of the authentication processing method according to any one of claims 20 to 52.

62. A readable storage medium, wherein the readable storage medium stores a program or instructions, and the program or instructions are executed by a processor to implement the steps of the authentication processing method according to any one of claims 16 to 52.
